# EUROPEAN PATENT APPLICATION

(11) **EP 4 064 426 A1**
(43) Date of publication of application: **28.09.2022**
(21) Application number: 21184302.4
(22) Date of filing: 07.07.2021
(51) Int. Cl.: H01M 50/166, F25D 11/00, H01M 50/204, H01M 50/271

(54) **BATTERY FOR VEHICLE-MOUNTED REFRIGERATOR**

(30) Priority: 24.03.2021 CN 202120599744 U
(71) Applicant: Foshan Alpicool Electric Appliance Co., Ltd., Foshan, Guangdong 528000 (CN)
(72) Inventor: Shi, Jianglong, Baoji City (CN); Zeng, Dongmei, Wuzhou City (CN); FAN, Gangqiang, Jiujiang City (CN)
(74) Representative: Sach, Greg Robert

(57) **Abstract**

Provided is a battery for a vehicle-mounted refrigerator that includes a battery housing and a battery holder. The battery housing includes a main housing and a battery cover arranged on the top of the main housing. Laterally movable buckle plates are symmetrically arranged between two ends of the battery cover. Two ends of the buckle plates extend out of the respective ends of the battery cover. The middle portion of the buckle plates is disposed outside the battery cover. The buckle plates at both ends are connected by an elastic piece, which is disposed in a limiting groove defined in the battery cover. The battery housing is inserted into the battery holder, where a lower part of one side of the battery housing is provided with an inner concave step portion, and a charging socket is installed at the center of the top of the inner concave step portion. A step is arranged on the lower part of an inner side of the battery holder, and a charging plug corresponding to the charging socket is centrally arranged on the upper side of the step. invention

## Description

### TECHNICAL FIELD

This application relates to the field of vehicle-mounted refrigerators, and more particularly relates to a battery for a vehicle-mounted refrigerator.

### BACKGROUND

With the improvement of people's living standards, more and more people will put a car refrigerator in their cars when they drive out to play. In order to make the car refrigerator work continuously, the car refrigerator generally comes with its own power supply, but most of the current car refrigerator power supplies cannot be removed, and can only be charged onsite, which is inconvenient to use.

There are also removable car refrigerator batteries on the market, but they have a complicated structure. In particular, they use many springs that are prone to jams, and the cost is relatively high.

### SUMMARY

This application provides a battery for a vehicle-mounted refrigerator, which has a simple structure and provides convenience of use, and can allow quick battery replacement.

In order to achieve the above objective, this application provides the following technical solutions. There is provided a battery for a vehicle-mounted refrigerator that includes a battery housing and a battery holder. The battery housing includes a main housing and a battery cover arranged on the top of the main housing. Laterally movable buckle plates are symmetrically arranged between two ends of the battery cover. Two ends of the buckle plates extend from the respective ends of the battery cover. The middle portion of the buckle plates is disposed outside the battery cover. The buckle plates at both ends are connected by an elastic piece, which is disposed in a limiting groove defined in the battery cover. The battery housing is inserted into the battery holder, where a lower part of one side of the battery housing is provided with an inner concave step portion, and a charging socket is installed at the center of the top of the inner concave step portion. A step is arranged on the lower part of an inner side of the battery holder, and a charging plug corresponding to the charging socket is centrally arranged on the upper side of the step.

In one embodiment, a connecting groove is defined in an inner side of the buckle plates at a position corresponding to the elastic piece, and an elastic piece connecting member is arranged at an end of the connecting groove.

In one embodiment, the elastic piece is a spring, and the elastic piece connecting portion includes an insert plate and a spring insert pin arranged at the end of the insert plate.

In one embodiment, a plurality of insert slots are defined side by side in the charging socket, and a insert plates that are operative to be inserted into the insert slots are defined side by side on the charging plug.

In one embodiment, multiple guide slots are vertically defined in the step, and guide insert plates corresponding to the guide slots are arranged on the inner concave step portion.

Further, a switch button is installed on the battery cover, where the upper surface of the switch button is lower than the upper surface of the battery cover. Connecting bars connected to the battery cover are symmetrically arranged on the two sides of the switch button, and the lower side of the switch button is in contact with the control switch on the control circuit board inside the battery cover.

Further, a plurality of raised strips are uniformly arranged on an upper edge of the main housing, and the raised strips are bonded with the battery cover by way of heat fusion, where the raised strips have a triangular cross section.

Further, multiple guiding ribs are uniformly and vertically arranged on the outer side wall of the main housing, and the main housing is inserted into the battery holder and the guiding ribs are in close contact with the inner side wall of the battery holder.

Further, multiple power indicators and status indicators are arranged side by side on the control circuit board. The status indicators are exposed on the upper end of the battery cover, and multiple display openings in one-to-one correspondence with the power indicators are defined in the upper end of the battery cover. Inner cavities in one-to-one correspondence with the display openings and the status indicators are defined in the battery cover, where the inner cavities cover the power indicators and the status indicators.

Compared with the related art, the present invention provides the following benefits.

The structure is simple and the operation is convenient. It adopts the structure of the elastic member whose position is restricted so that when the buckle plates move and the elastic piece is compressed, they will not go astray thus avoiding jamming. It is capable of power display and status display functions, the inner cavity can cover the power indicators and the status indicators, thus enabling waterproof effect and providing convenience of use. The height of the switch button is lower than the upper surface of the battery cover, so that it is not easy to be triggered by accidental touch, and the two sides of the button are connected with the battery cover through the connection bars. To press the switch button, the connection bars need to be deformed, and a certain amount of downward force is required, which also effectively prevent the switch button from being switched on by accidental touch. There is no need for wire connection between the battery and the device for power supply purposes. The power supply is fulfilled by the contact between the charging plug and the charging socket, and when the battery is placed it is automatically inserted and engaged thereby realizing contact charging, which is very convenient. A sealed connection between the battery housing and the upper cover is realized by setting the raised strips and performing heat melting, resulting in superior sealing performance and waterproofness, thus improving the battery life. The battery can be easily inserted into the battery box by means of the guide ribs, and the battery is made relatively stable after insertion, and will not shake and make noise.

### BRIEF DESCRIPTION OF DRAWINGS

FIG. 1 is a perspective exploded view of the present invention.
FIG. 2 is a perspective exploded view of the present invention.
FIG. 3 is a schematic side half-sectional view of the present invention.
FIG. 4 is a schematic diagram of a battery holder according to the present invention.
FIG. 5 is a top schematic view of a battery housing according to the present invention.
FIG. 6 is a sectional schematic view taken along line A-A shown in FIG. 5.
FIG. 7 is a partial enlarged schematic diagram of the present invention.
FIG. 8 is a perspective schematic diagram of a battery holder according to the present invention.
FIG. 9 is a perspective schematic diagram of a battery cover according to the present invention.
FIG. 10 is a perspective schematic diagram of a battery holder according to the present invention.
FIG. 11 is a side half-sectional schematic diagram of a battery housing according to the present invention.
FIG. 12 shows an enlarged structure of A shown in FIG. 11.
FIG. 13 is a front half-sectional diagram of a battery housing according to the present invention.

### DETAILED DESCRIPTION

Hereinafter, technical solutions in the embodiments according to the present invention will be described in a definite and comprehensive manner in connection with the accompanying drawings in the embodiments according to the present invention. Apparently, the embodiments described herein are only a part, rather than all of the embodiments in accordance with the present invention. Based on the embodiments of the present invention, all other embodiments obtained by those having ordinary skill in the art without investing creative efforts shall all fall in the scope of protection of the present invention.

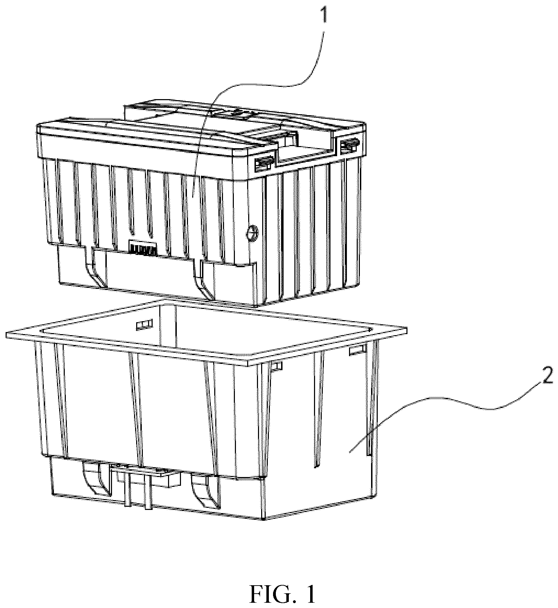

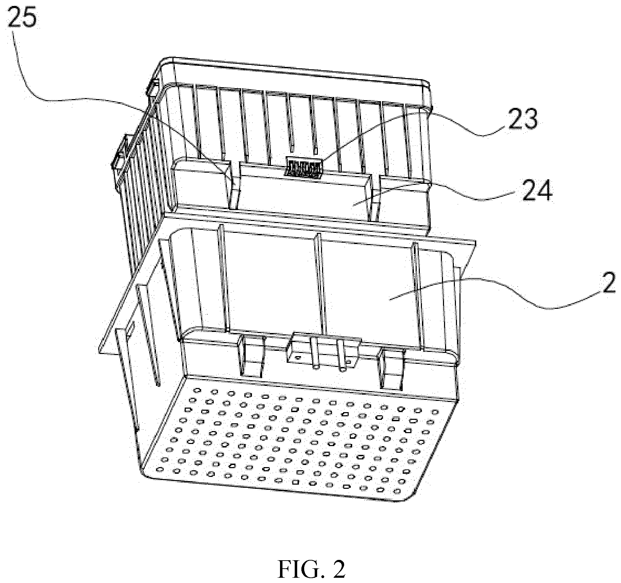

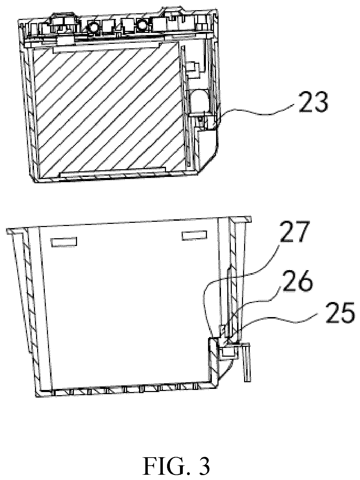

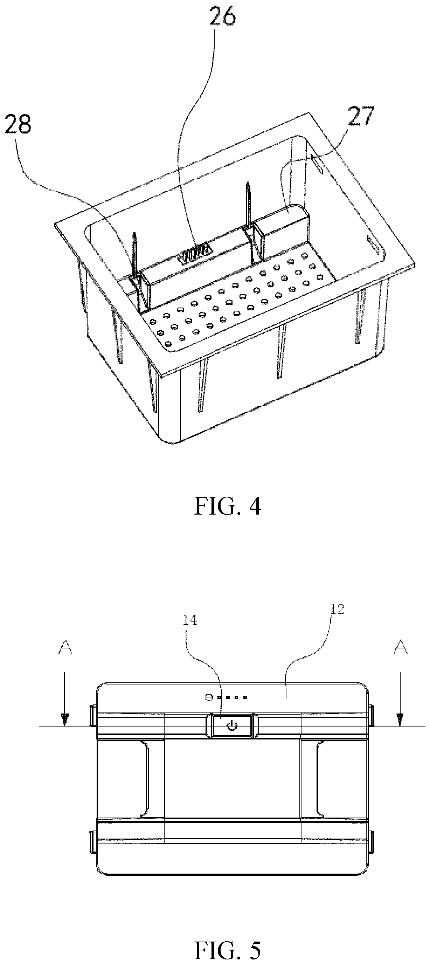

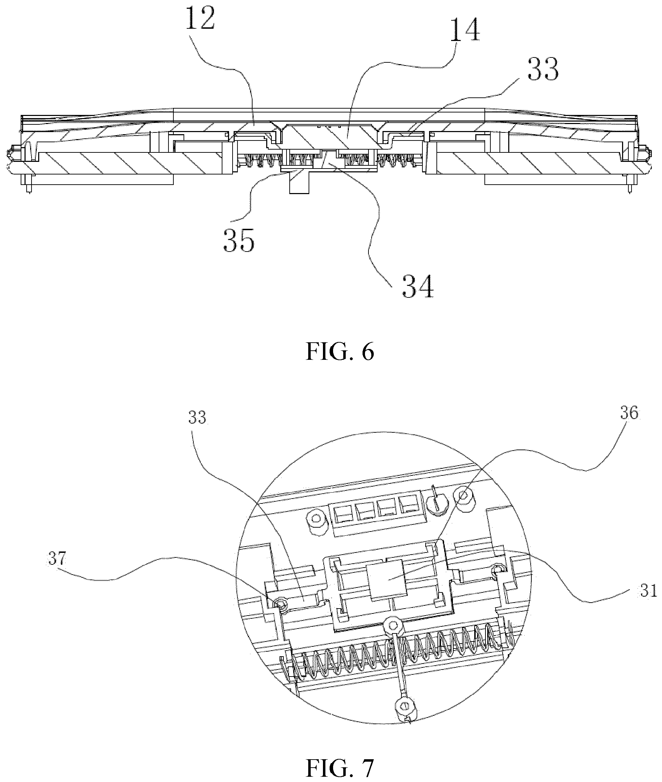

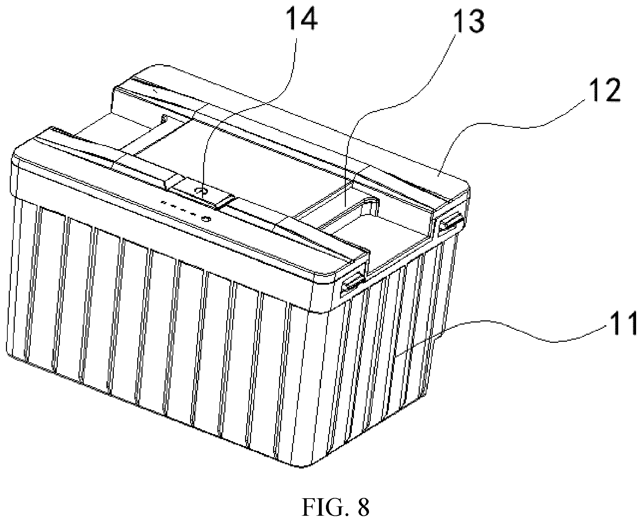

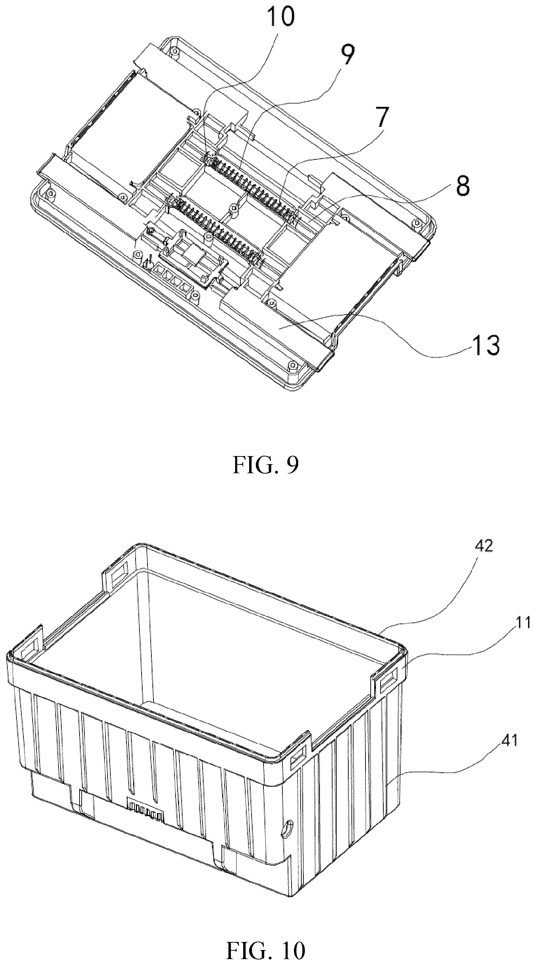

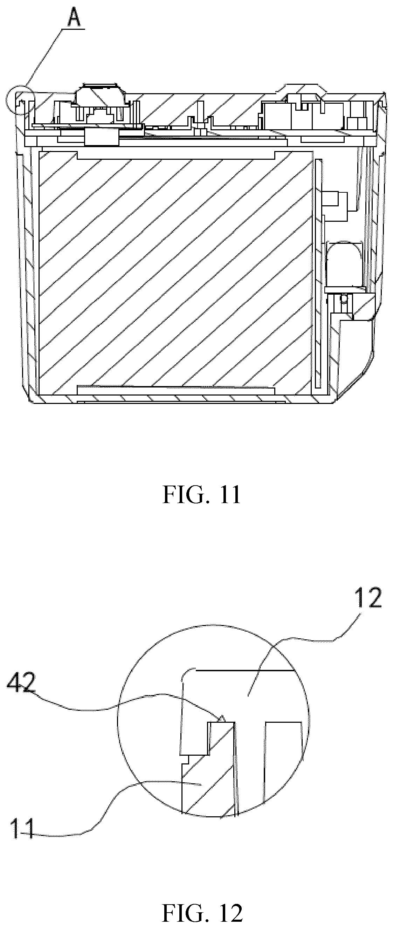

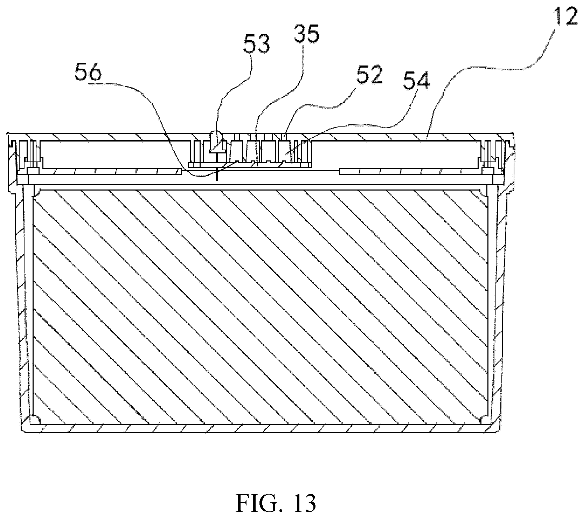

As illustrated in FIGS. 1-14, there is provided a battery for a vehicle-mounted refrigerator that includes a battery housing 1 and a battery holder 2. The battery housing 1 includes a main housing 11 and a battery cover 12 arranged on the top of the main housing 11. Laterally movable buckle plates 13 are symmetrically arranged between two ends of the battery cover 12. Two ends of the buckle plates 13 extend from the respective ends of the battery cover 12. The middle of the buckle plates 13 are disposed outside the battery cover 12. The buckle plates 13 at both ends are connected by an elastic piece 7, which is disposed in a limiting groove 9 defined in the battery cover 12. The battery housing 1 is inserted into the battery holder 2, where a lower part of one side of the battery housing 1 is provided with an inner concave step portion 24, and a charging socket 23 is installed at the center of the top of the inner concave step portion 24. A step 27 is arranged on the lower part of an inner side of the battery holder 2, and a charging plug 26 corresponding to the charging socket 23 is centrally arranged on the upper side of the step 27.

It is only needed to move the buckle plates 13 at both ends to make the protruding parts of the buckle plates 13 detach from the vehicle-mounted refrigerator, and the buckle plates 13 will automatically recover under the action of the elastic members 7 after being released.

The limit slot 9 can limit the position of the elastic member 7 to ensure that the buckle plates 13 at both ends are relatively stable when they are returned, and there will be no jamming.

A connecting groove 8 is defined in an inner side of the buckle plates 13 at a position corresponding to the elastic piece 7, and an elastic piece connecting member 10 is arranged at an end of the connecting groove 8. By means of the elastic piece connecting portion 10, the end of the elastic piece 7 can be firmly fixed so that the end of the elastic piece 7 will not deviate when it is subjected to a force.

The elastic piece 7 is a spring, and the elastic piece connecting portion 10 includes an insert plate and a spring insert pin arranged at the end of the insert plate.

When the battery housing 1 is placed in the battery holder 2, the charging socket 23 and the charging plug 26 are automatically coupled to each other because the charging socket 23 corresponds the charging plug 26 in position.

A plurality of insert slots are defined side by side in the charging socket 23, and a insert plates that are operative to be inserted into the insert slots are defined side by side on the charging plug 26.

Multiple guide slots 28 may be vertically defined in the step 27, and guide insert plates 25 corresponding to the guide slots 28 are arranged on the inner concave step portion 4, which can effectively prevent the deviation between the charging socket 23 and the charging plug 26 from causing collision and damage.

A switch button 14 may be installed on the battery cover 12, where the upper surface of the switch button 14 is lower than the upper surface of the battery cover 12. Connecting bars 33 connected to the battery cover 12 are symmetrically arranged on the two sides of the switch button 14, and the lower side of the switch button 14 is in contact with the control switch 34 on the control circuit board 35 inside the battery cover 12. Furthermore, the two sides of the switch button 14 are connected to the battery cover through the connecting bars 33. To press the switch button 14, the connecting bars 33 need to be deformed, and a certain amount of downward force is required, which thus effectively prevents the switch button 14 from being turned on by an accidental touch.

Multiple raised strips 42 may be uniformly arranged at the upper edge of the main housing 11, and these raised strips 42 are bonded with the battery cover 12 after being thermally melted. The raised strips 42 may have a triangular cross-section. When in use, cover the battery cover 12 on the battery housing 1, so that the raised strips 42 are in contact with the battery cover 12, and then a downward force is applied to the battery cover 12, and at the same time, ultrasonic waves are used to act on the raised strips 42 so that the raised strips 42 are thermally fused and bonded together with the battery cover 12.

Multiple guiding ribs 41 may be uniformly and vertically arranged on the outer side wall of the main housing 11, and the main housing 11 is inserted into the battery holder 2 and the guiding ribs 41 are in close contact with the inner side wall of the battery holder 2. By means of the guide ribs, the battery can be easily inserted into the battery box, and the battery is relatively stable after being inserted, and will not shake and make noise.

Multiple power indicators 56 and status indicators 53 may be arranged side by side on the control circuit board 35. The status indicators 53 are exposed on the upper end of the battery cover 12, and multiple display openings 52 in one-to-one correspondence with the power indicators 56 are defined in the upper end of the battery cover 12. Inner cavities 54 in one-to-one correspondence with the display openings 52 and the status indicators 53 are defined in the battery cover 12, where the inner cavities 53 covers the power indicators 56 and the status indicators 53 so that the inner cavities 54 are in close contact with the control circuit board 35, so that it can prevent external water from entering and contacting the control circuit board 35 except for the positions of the power indicators 56 and the status indicators 53, thereby providing superior waterproof effects.

Although the present invention has been described above with reference to the embodiments, various modifications can be made thereto and the components and elements described therein can be replaced with equivalents without departing from the scope of the present invention. In particular, as long as no structural conflict is present, the various features in the embodiments disclosed in the present invention can be combined with each other in any manner possible. These combinations are not exhausted in this specification only for the sake of omitting space and saving resources. Therefore, the present invention will not be limited to the specific embodiments disclosed herein, but rather will encompass all technical solutions that fall in the scope defined in and by the appended claims.

## Claims

1. A battery for a vehicle-mounted refrigerator, comprising a battery housing (1) and a battery holder (2), wherein the battery housing (1) comprises a main housing (11) and a battery cover (12) arranged on a top of the main housing (11), wherein laterally movable buckle plates (13) are symmetrically arranged between two ends of the battery cover (12), two ends of the buckle plates (13) extend out of respective ends of the battery cover (12), and a middle portion of the buckle plates (13) is disposed outside the battery cover (12), wherein the buckle plates (13) at both ends are connected by an elastic piece (7) that is disposed in a limiting groove (9) defined in the battery cover (12), wherein the battery housing (1) is operative to be inserted into the battery holder (2), wherein an inner concave step portion (24) is defined in a lower part of one side of battery housing (1), a charging socket (23) is installed at a center of a top of the inner concave step portion (24), a step (27) is arranged on a lower part of an inner side of the battery holder (2), and a charging plug (26) corresponding to the charging socket (23) is arranged at a center on an upper side of the step (27).

2. The battery of claim 1, wherein a connecting groove (8) is defined in an inner side of the buckle plates (13) at a position corresponding to the elastic piece (7), and an elastic piece connecting member (10) is arranged at an end of the connecting groove (8).

3. The battery of claim 2, wherein the elastic piece (7) is a spring, and the elastic piece connecting portion (10) comprises an insert plate and a spring insert pin arranged at an end of the insert plate.

4. The battery of claim 1, wherein a plurality of insert slots are defined side by side in the charging socket (23), and insert plates corresponding to the plurality of insert slots are arranged side by side on the charging plug (26).

5. The battery of claim 1, wherein a plurality of guide slots (28) are vertically defined in the step (27), and guide insert plates (25) corresponding to the guide slots (28) are arranged in the inner concave step portion (4).

6. The battery of claim 4, wherein a switch button (14) is installed on the battery cover (12), and an upper surface of the switch button (14) is lower than the battery cover (12), wherein connecting bars (33) connected to the battery cover (12) are symmetrically arranged on both sides of the switch button (14), and a lower side of the switch button (14) is in contact with a control switch (34) arranged on a control circuit board (35) inside the battery cover (12).

7. The battery of claim 6, wherein a plurality of raised strips (42) are uniformly arranged on an upper edge of the main housing (11), and the raised strips (42) are bonded with the battery cover (12) after being thermally melted, and wherein the raised strips (42) have a triangular cross section.

8. The battery of claim 1, wherein a plurality of guide ribs (41) are uniformly and vertically arranged on an outer side wall of the main housing (11), and the main housing (11) is operative to be inserted into the battery holder (2) and the plurality of guide ribs (41) are in close contact with an inner side wall of the battery holder (2).

9. The battery of claim 6, wherein a plurality of power indicators (56) and status indicators (53) are arranged side by side on the control circuit board (35), wherein the status indicators (53) are disposed to be exposed on an upper end of the battery cover (12), and a plurality of display openings (52) in one-to-one correspondence with the power indicators (56) are defined in the upper end of the battery cover (12), wherein inner cavities (54) in one-to-one correspondence with the display openings (52) and the status indicators (53) are defined in the battery cover (12), and the inner cavities (54) cover the power indicators (56) and the status indicators (53).
